# EUROPÄISCHE PATENTANMELDUNG

(11) **EP 0 551 607 A1**
(43) Veröffentlichungstag der Anmeldung: **21.07.1993**
(21) Anmeldenummer: 92120712.2
(22) Anmeldetag: 04.12.1992
(51) Int. Cl.: B60R 1/06

(54) **Aussenspiegel für ein Kraftfahrzeug mit Rastvorrichtung**

(30) Priorität: 13.12.1991 DE 4141163
(71) Anmelder: HOHE KG, D-97903 Collenberg (DE)
(72) Erfinder: Schnellbach, Klaus, W-6982 Freudenberg (DE)
(74) Vertreter: Zinngrebe, Horst, Dr.rer.nat.

(57) **Zusammenfassung**

Beschrieben wird ein Außenspiegel für ein Kraftfahrzeug mit einem Spiegelfuß (2), auf welchem ein Spiegelgehäuse (10) um die Achse (32) eines das Spiegelgehäuse (10) mit dem Spiegelfuß (2) federbelastet verbindenden Hohlniets (30) schwenkbar befestigt ist, wobei zwischen Spiegelfuß (2) und Spiegelgehäuse (10) ein vom Hohlniet (30) durchsetzter Rastkörper (50) eingefangen ist und an einer Stirnfläche des Rastkörpers (50) sowie an einem benachbarten Teil des Spiegelfusses (2) oder Spiegelgehäuses (10) lösbar ineinander eingreifende Rastelemente (52,56,58) ausgebildet sind. Um zu verhindern, daß am Übergang der Außenflächen des Spiegelgehäuses (10) und des Spiegelfusses (2) ein das Abschwenken des Spiegelgehäuses (10) ermöglichender und bei schneller Fahrt zu Windgeräuschen Anlaß gebender Schlitz vorgesehen werden muß, ist der Rastkörper (50) im Spiegelgehäuse (10) oder im Spiegelfuß (2) unverdrehbar gehalten und axial relativ zum Spiegelgehäuse (10) sowie gleichzeitig relativ zum Spiegelfuß (2) beweglich.

## Beschreibung

Die Erfindung betrifft einen Außenspiegel für ein Kraftfahrzeug mit einem Spiegelfuß, auf welchem ein Spiegelgehäuse um eine Achse eines das Spiegelgehäuse mit dem Spiegelfuß federbelastet verbindenden Hohlniets schwenkbar befestigt ist, wobei zwischen Spiegelfuß und Spiegelgehäuse ein vom Hohlniet durchsetzter Rastkörper axial beweglich eingefangen ist und an einer Stirnfläche des Rastkörpers sowie an einem benachbarten Bauteil lösbar ineinander eingreifende Rastelemente ausgebildet sind.

Die deutsche Offenlegungsschrift 36 03 188 beschreibt einen Außenrückspiegel für Kraftfahrzeuge, bei welchem der verstärkte spiegelfußseitige untere Teil des Spiegelgehäuses an einem aus dem Spiegelfuß vorstehenden Arm um die Achse eines Hohlniets schwenkbar befestigt ist, wobei das Spiegelgehäuse mittels eines zwischen dem Arm und einem radialen Ringbund des Hohlniets eingespannten Tellerfederpaket federbelastet mit dem Spiegelfuß verbunden ist. Zwischen der dem Spiegelgehäuse zugewandten Oberseite des Armes und der erwähnten Spiegelgehäuseverstärkung ist in einer Ausnehmung eine den Hohlniet umgebende Ringscheibe eingefangen, deren auf den Arm zuweisende Stirnseite radial verlaufende Nuten aufweist. Zum Eingriff in diese Nuten sind aus der Oberseite des Armes vorstehende und formlich an die Nuten angepaßte Rastvorsprünge ausgebildet. Bei Eingriff der aus den Nuten und den Rastvorsprüngen gebildeten Rastelemente ineinander wird das Spiegelgehäuse in definierter Lage, zum Beispiel seiner Gebrauchslage, relativ zum Spiegelfuß gehalten.

Beim Abschwenken des Spiegelgehäuses aus dieser definierten Lage aufgrund hinreichender Krafteinwirkung auf dasselbe kommenn die Rastelemente durch eine axiale Relativbewegung zwischen Spiegelgehäuse und Spiegelfuß außer Eingriff, so daß das Gehäuse der Krafteinwirkung durch Abschwenken ausweichen kann.

Daher muß bei der Gestaltung der windschlüpfigen Außenflächen von Spiegelfuß und Spiegelgehäuse insbesondere in deren Übergangsbereich soviel Zwischenraum gelassen werden, daß die erwähnte, zum Abschwenken des Spiegelgehäuses erforderliche axiale Relativbewegung zwischen Spiegelgehäuse und Spiegelfuß hinreichend Raum vorfindet. Bei der Gebrauchslage des Spiegelgehäuses tritt dieser Raum als offener Schlitz am Übergang der Außenfläche des Spiegelfusses zur Außenfläche des Spiegelgehäuses in Erscheinung, der nicht nur den optischen Eindruck des Außenspiegels nachteilig beeinflußt, sondern vor allem auch bei schneller Fahrt zu Windgeräuschen Anlaß gibt.

Der Erfindung liegt daher die Aufgabe zugrunde, bei einem Außenspiegel für ein Kraftfahrzeug Maßnahmen vorzusehen, die eine Entstehung von Windgeräuschen, vor allem bei schneller Fahrt, vermeiden können.

Bei dem eingangs genannten Außenspiegel ist dazu erfindungsgemäß vorgesehen, daß der relativ zu dem Spiegelgehäuse oder dem Fuß unverdrehbar gehaltene Rastkörper axial relativ zum Gehäuse sowie gleichzeitig relativ zum Fuß beweglich ist. Damit wird erreicht, daß beim Abschwenken des Spiegelgehäuses relativ zum Spiegelfuß aus der durch den Eingriff der Rastelemente definierten Position heraus kein axiales Anheben des Spiegelgehäuses erfolgt, es vielmehr in der Ebene seiner Gebrauchslage verschwenkt werden kann. Damit entfällt die Notwendigkeit, am Übergang der Außenflächen des Spiegelfusses und des Spiegelgehäuses einen besonderen ein axiales Anheben des Spiegelgehäuses erlaubenden Raum vorzusehen, so daß die Außenflächen praktisch nahtlos ineinander übergehen können und die erwähnten Windgeräusche vermieden werden.

In bevorzugter Ausgestaltung der Erfindung empfiehlt es sich, den Rastkörper mit einer axial in Richtung des Rastelementeneingriffs wirkenden Feder zu beaufschlagen. Dazu ist es zweckmäßig, wenn der Rastkörper eine axiale, zentrische Ausnehmung aufweist, in der die Feder beherbergt werden kann.

In zweckmäßiger Ausgestaltung der Erfindung kann das am unteren spiegelfußnahen Abschnitt des Spiegelgehäuses ohnehin vorgesehene Verstärkungsteil becherförmig ausgeführt sein, welches den Rastkörper umgibt und an dessen oberer Innenfläche sich die Feder abstützt.

Um einen sicheren Formenschluß zwischen dem Rastkörper und beispielsweise dem Spiegelgehäuse sicherzustellen, kann in Ausgestaltung der Erfindung die sich axial erstreckende Innnenfläche des Verstärkungsteils winkelig gestaltet sein, wobei die Außenkontur des Rastkörpers dieser Winkelform angepaßt ist. Eine zwischen die Außenkontur des Rastkörpers und der Innenfläche des Verstärkungsteils zwischengelegte Blattfeder kann den Rastkörper in den Formenschluß drücken.

Alternativ kann von der im übrigen zylindrischen Außenfläche des Rastkörpers wenigstens eine Nase radial vorstehen und in einer in die Innenfläche des Verstärkungsteils geschnittenen achsparallelen Nut eingefangen sein.

Die Erfindung wird nachstehend anhand des in der beigefügten Zeichnung dargestellten Ausführungsbeispiels im einzelnen beschrieben. Es zeigen:

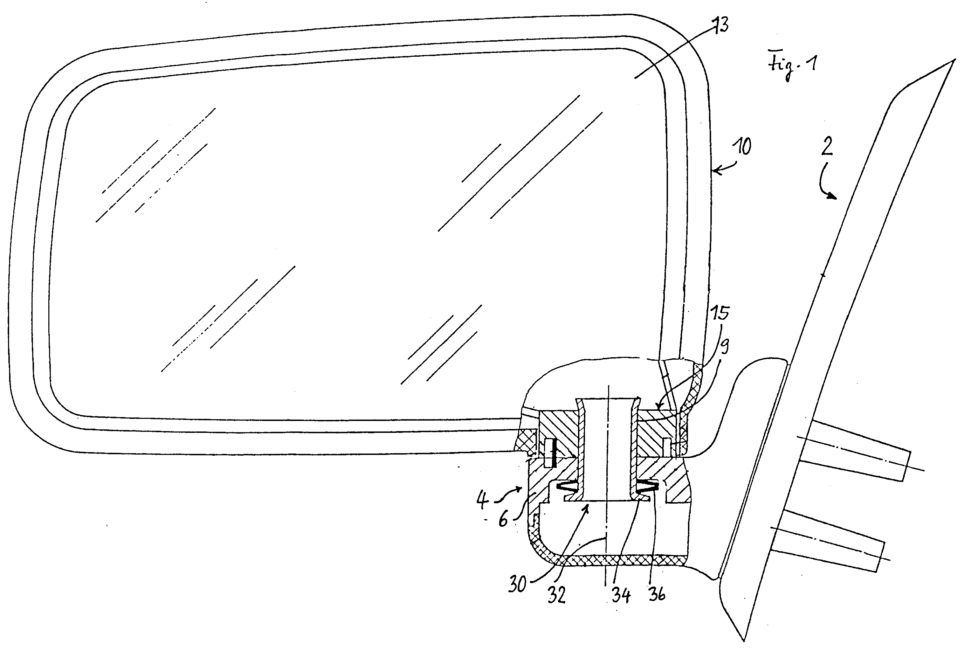

- Fig. 1: eine schematische Ansicht eines PKW-Außenspiegels herkömmlicher Bauart, der im Bereich des Schwenkgelenks aufgeschnitten ist;
- Fig. 2: eine Ansicht des spiegelfußnahen unteren Abschnittes des mit den Merkmalen der Erfindung ausgestatteten Spiegelgehäuses;
- Fig. 3: die Ansicht eines Schnittes längs der Linie A-A aus Fig. 2;
- Fig. 4: die Ansicht eines Schnittes längs der Linie B-B aus Fig. 2; und
- Fig. 5: eine Daraufsicht auf einen Arm des Spiegelfusses im Bereich des Schwenkgelenkes.

Von dem im ganzen mit 2 bezeichneten Spiegelfuß steht in bekannter Weise seitlich ein Arm 4 vor, dessen Oberseite von einer massiven Gelenkplatte 6 gebildet ist und der unterhalb der Gelenkplatte 6 hohl ist. Der Außenspiegel weist ferner ein Spiegelgehäuse 10 auf, in welchem ein gegebenenfalls verstellbares Spiegelglas 13 gehalten ist. Das Spiegelgehäuse 10 besitzt in seinem unteren spiegelfußnahen Eckbereich ein Verstärkungsteil 15, dessen Außenfläche auf der Oberseite der Gelenkplatte 6 sitzt. Gelenkplatte 6 und Verstärkungsteil 15 weisen je eine Durchgangsbohrung auf, wobei ein Hohlniet 30 beide Öffnungen durchsetzt. Zwischen einem radial umgebörtelten Rand 34 des Rohrniets 30 und der Unterseite der Gelenkplatte 6 ist ein Tellerfederpaket 36 eingespannt, welches das Verstärkungsteil 15 in Anlage an die Gelenkplatte 6 drückt. Auf diese Weise ist das Spiegelgehäuse 10 in an sich bekannter Weise um die Achse 32 des Hohlniets 30 verschwenkbar.

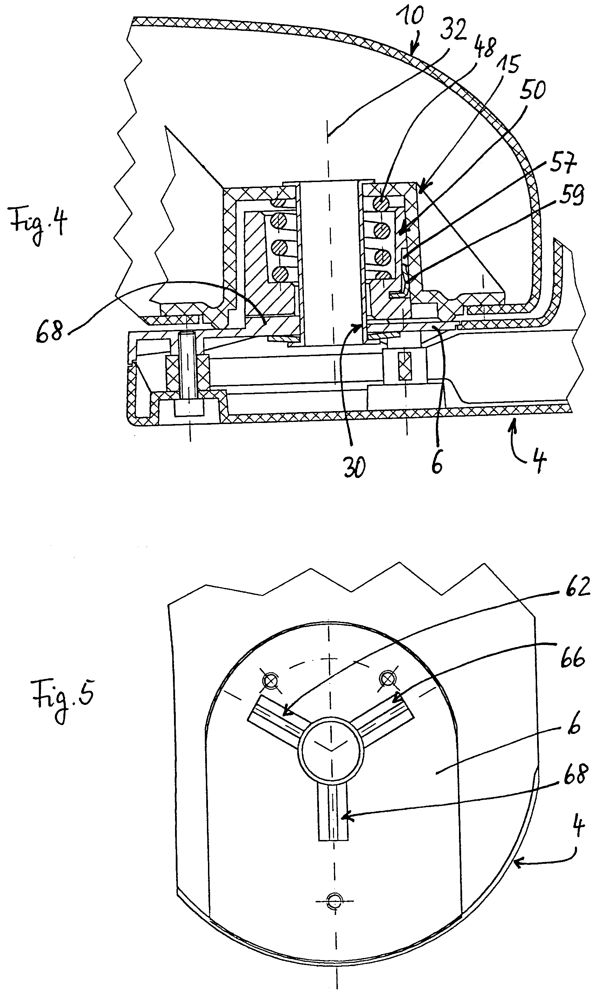

Das Verstärkungsteil 15 ist gemäß Fig. 3 im Querschnitt umgekehrt becher- oder U-förmig und an seinem auf den Arm 4 zuweisenden Ende mit einem radial auswärts weisenden Flansch 17 versehen. Aus dem Flansch 17 steht ein Ring 19 vor, mit welchem das Verstärkungsteil 15 und damit das Spiegelgehäuse 10 auf dem Arm 4 beziehungsweise der Gelenkplatte 6 aufliegt. Innen ist das Verstärkungsteil 15 im Querschnitt polygonal, hier in Form eines sechsflächigen Hohlprismas ausgeführt, dessen benachbarte Flächen einen Winkel von etwa 60° einschließen. In Umfangsrichtung wechselt jeweils eine breitere Fläche mit einer schmaleren ab. Zwei der breiteren Flächen, die mit 11 und 13 bezeichnet sind, wirken als ebene Keilflächen, auf die noch eingegangen wird.

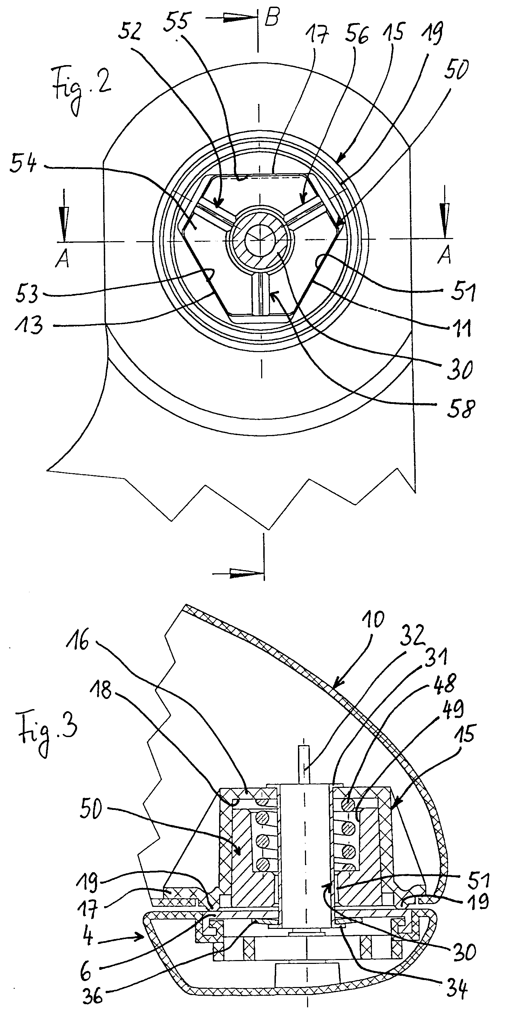

Im Inneren des Verstärkungsteils 15 ist ein Rastkörper 50 beherbergt, der eine geringere axiale Tiefe hat als die Ausnehmung im Verstärkungsteil 15 und in seiner Außenkontur der polygonalen Konfiguration der Innenflächen, insbesondere der Flächen 11 und 13, des Verstärkungsteils 15 angepaßt ist. Wie insbesondere aus Fig. 2 zu erkennen ist, liegt der Rastkörper 50 mit zwei Außenflächen 51 und 53 an den Keilflächen 11, 13 der Innenperipherie des Verstärkungsteils 15 an. Die übrigen Außenflächen können Abstand von den benachbarten Innenflächen des Verstärkungsteils 15 haben. Insbesondere ist in einer den Außenflächen 51, 53 gegenüberliegenden Außenfläche 55 des Rastkörpers 50 eine Tasche 57 durch Zurückversetzung der Außenfläche 55 ausgeformt, in welche eine Blattfeder 59 eingelegt ist. Die Blattfeder 59 stützt sich auf der gegenüberliegenden Innenwandfläche 17 des Verstärkungsteils 15 ab und drückt den Rastkörper 50 radial bezüglich der Achse 32 in einen Formenschluß der Flächen 11 und 51 sowie 13 und 53. Damit sitzt der Rastkörper in der Ausnehmung des Verstärkungsteils 15 unverdrehbar.

In die bezüglich des Verstärkungsteils 15 freie Stirnfläche 54 des Rastkörpers 50 sind drei radiale Nuten 52, 56, 58 geschnitten, wobei je zwei dieser Nuten jeweils einen Winkel von etwa 120° einschließen.

Der Rastkörper 50 besitzt eine mittige axiale Durchgangsbohrung 51, durch die sich der Hohlniet 30 erstreckt. Von der der Stirnseite 54 gegenüberliegenden Seite des Rastkörpers 50 her ist die Durchgangsbohrung 51 radial erweitert, so daß in dieser Erweiterung 49 eine den Hohlniet 30 umgebende Druckfeder 48 eingesetzt werden kann, die sich an einem Ende auf dem Boden der Erweiterung 49 und am gegenüberliegenden Ende am Boden 18 der Deckplatte 16 des Verstärkungsteils 15 abstützt. Die Druckfeder 48 ist bestrebt, den Rastkörper 50 aus der polygonalen Ausnehmung im Verstärkungsteil 15 axial nach außen zu drücken. Gemäß Fig. 3 übergreift der radial auswärts weisende, der Umbörtelung 34 gegenüberliegende Rand 31 des Hohlniets 30 die Deckplatte 16.

Die Gelenkplatte 6 des Spiegelfusses 4 ist mit drei radialen und erhabenen Rippen 62, 66, 68 versehen, von denen je zwei Rippen einen Winkel von etwa 120° einschließen. Jede Rippe ist nicht länger als eine der drei gleichlangen Nuten 52, 56, 58 und ist in ihrem Profil dem Nutenprofil angepaßt. Die Rippen 62, 66, 68 sowie die Nuten 52, 56, 58 bilden Rastelemente, die bei Eingriff jeweils eines Nut-/Rippenpaares 52, 62; 56, 66; 58, 68 den Rastkörper 50 auf der Gelenkplatte 6 in Umfangsrichtung eindeutig festlegen. Vermöge der Unverdrehbarkeit des Rastkörpers 50 im Verstärkungsteil 15 und damit bezüglich des Spiegelgehäuses 10 wird die umfangsmäßig eindeutige Fixierung des Spiegelgehäuses 10 bezüglich des Spiegelfusses 2 bei Eingriff der genannten Rastelemente erreicht.

Wird auf das Spiegelgehäuse eine Kraft in Umfangsrichtung hinreichender Stärke ausgeübt, gelangen die Rastelementenpaare 52, 62; 56, 66; 58, 68 außer Eingriff, wobei der Rastkörper 50 gegen die Wirkung der Druckfeder 48 axial weiter in die Ausnehmung des Verstärkungsteils eindringt, ohne daß das Spiegelgehäuse 10 axial vom Spiegelfuß 2 entsprechend abhebt. Dies wird möglich, wenn die Druckfeder 48 weicher ausgelegt ist als das das Spiegelgehäuse am Spiegelfuß festhaltende Tellerfederpaket 36. Das Spiegelgehäuse 10 schwenkt unter der Krafteinwirkung relativ zum Spiegelfuß 2 seitlich in der Ebene seiner Gebrauchslage ab, wobei dann der Ring 19, der radial außerhalb der den Rastkörper 50 aufnehmenden Ausnehmung am Verstärkungsteil 15 ausgebildet ist, auf der planen Oberfläche der Gelenkplatte 6 reitet.

Bei Rückkehr des Spiegelgehäuses in seine Gebrauchslage fallen die Rastelemente 52 und 62 beziehungsweise 56 und 66 beziehungsweise 58 und 68 wieder in ihre Raststellung ein, wobei der Rastkörper 50 unter Wirkung der Druckfeder 48 sich axial auf die Gelenkplatte 6 solange zu bewegt, bis die Rastelementpaare in sicherem Eingriff sich befinden.

## Patentansprüche

1. Außenspiegel für ein Kraftfahrzeug mit einem Spiegelfuß (2), auf welchem ein Spiegelgehäuse (10) um die Achse (32) eines das Spiegelgehäuse (10) mit dem Spiegelfuß (2) federbelastet verbindenden Hohlniets (50) schwenkbar befestigt ist, wobei zwischen dem Spiegelfuß (2) und dem Spiegelgehäuse (10) ein vom Hohlniet (50) durchsetzter Rastkörper (50) eingefangen ist und an einer Stirnfläche (54) des Rastkörpers (50) sowie an einem benachbarten Teil (6) des Spiegelfusses (2) oder des Spiegelgehäuses (10) lösbar ineinander eingreifende Rastelemente (52, 56, 58; 62, 66, 68) ausgebildet sind, dadurch gekennzeichnet, daß der Rastkörper (50) in dem Spiegelgehäuse (10) oder dem Spiegelfuß (2) unverdrehbar gehalten und axial relativ zum dem Spiegelgehäuse (10) sowie gleichzeitig relativ zu dem Spiegelfuß (2) beweglich ist.

2. Außenspiegel nach Anspruch 1, dadurch gekennzeichnet, daß der Rastkörper (50) mit einer axial in Richtung des Rastelementeneingriffs wirkenden Feder (48) beaufschlagt ist.

3. Außenspiegel nach Anspruch 2, dadurch gekennzeichnet, daß der Rastkörper (50) eine axiale, zentrische Ausnehmung (49) für die Feder (48) aufweist.

4. Außenspiegel nach einem der vorstehenden Ansprüche, dadurch gekennzeichnet, daß das Spiegelgehäuse an seinem unteren spiegelfußnahen Abschnitt ein Verstärkungsteil (15) aufweist, welches becherförmig ausgeführt ist und den Rastkörper (50) gegebenenfalls mit Feder (48) umgibt.

5. Außenspiegel nach einem der vorstehenden Ansprüche, dadurch gekennzeichnet, daß die sich axial erstreckende Innenfläche (11, 13) des Verstärkungsteils (15) winklig gestaltet ist, wobei die Außenkontur des Rastkörpers (50) dieser Winkelform angepaßt ist.

6. Außenspiegel nach Anspruch 5, dadurch gekennzeichnet, daß zwischen Rastkörper (50) und Innenfläche (17) des Verstärkungsteils (15) eine Feder (59) zwischengelegt ist.

7. Außenspiegel nach einem der Ansprüche 1 bis 4, dadurch gekennzeichnet, daß aus der zylindrischen Außenfläche des Rastkörpers (50) wenigstens eine Nase radial vorsteht und in einer in der Innenfläche des Verstärkungsteils geschnittenen achsparalleln Nut eingefangen ist.
